(19) Europäisches Patentamt
European Patent Office
Office européen des brevets

(11) **EP 4 440 207 A1**

(12) **EUROPEAN PATENT APPLICATION**
published in accordance with Art. 153(4) EPC

(43) Date of publication:
**02.10.2024 Bulletin 2024/40**

(21) Application number: **21965136.1**

(22) Date of filing: **25.11.2021**

(51) International Patent Classification (IPC):
**H04W 52/04** (2009.01)

(52) Cooperative Patent Classification (CPC):
**H04W 52/04**

(86) International application number:
**PCT/CN2021/133229**

(87) International publication number:
**WO 2023/092401 (01.06.2023 Gazette 2023/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **GUO, Shengxiang**
**Beijing 100085 (CN)**

(74) Representative: **Dehns Germany Partnerschaft mbB**
**Theresienstraße 6-8**
**80333 München (DE)**

(54) **POWER DETERMINATION METHOD AND APPARATUS**

(57) Disclosed in the embodiments of the present application are a power determination method and apparatus. The method comprises: determining out-of-band emission limitation information of a terminal device; and determining the power of the terminal device according to the out-of-band emission limitation information, such that the terminal device can determine different powers according to different limitations on out-of-band emission, can determine different power reduction values according to different conditions, and can reduce unnecessary power reduction under some special conditions, thereby enlarging the uplink coverage of a terminal, and effectively improving the communication efficiency and the quality of a communication link.

Determine out-of-band emission limitation information of the terminal device — 201

Determine a power of the terminal device according to the out-of-band emission limitation information — 202

FIG. 2

**Description**

**TECHNICAL FIELD**

The present disclosure relates to a field of communication technologies, and in particular, to power determination methods and apparatuses.

**BACKGROUND**

In a related art, a terminal allows a certain power reduction, that is, MPR (maximum power reduction), to meet in-band and out-of-band emission requirements. The larger the power reduction is, the smaller a power allowed by the terminal is, which will have a certain impact on uplink coverage of the terminal. In some situations, out-of-band emission of the terminal does not need to follow a strict limitation on the out-of-band emission in general situations, and at this time, the power reduction of the terminal is too large, which is not conducive to the uplink coverage of the terminal and reduces a communication efficiency.

**SUMMARY**

An embodiment of a first aspect of the present disclosure provides a power determination method. The method is performed by a terminal device and includes: determining out-of-band emission limitation information of the terminal device; and determining a power of the terminal device according to the out-of-band emission limitation information.

Optionally, the determining out-of-band emission limitation information of the terminal device includes: receiving indication information sent by a network device; and determining the out-of-band emission limitation information of the terminal device according to the indication information.

Optionally, the determining out-of-band emission limitation information of the terminal device includes: determining location information of the terminal device; and determining the out-of-band emission limitation information of the terminal device according to the location information.

Optionally, the out-of-band emission limitation information includes at least one of: an adjacent channel leakage ratio (ACLR), out-of-band emission, or out-of-band spurious emission.

Optionally, the determining a power of the terminal device according to the out-of-band emission limitation information includes: determining a power reduction value according to the out-of-band emission limitation information, a time-frequency resource location of the terminal device, the number of resource blocks, and a modulation manner of the terminal device; and determining the power of the terminal device according to the power reduction value.

Optionally, the determining a power of the terminal device according to the out-of-band emission limitation information includes: determining a power offset value according to the out-of-band emission limitation information; determining a reference power reduction value according to the time-frequency resource location of the terminal device, the number of the resource blocks, and the modulation manner of the terminal device; and determining the power reduction value according to the reference power reduction value and the power offset value.

Optionally, the method further includes: sending the power of the terminal device to a network device.

Optionally, the indication information is of at least one bit for indicating whether the terminal device may relax a limitation on out-of-band emission.

Optionally, the indication information is of multiple (two or more) bits for indicating a degree of relaxation which is applied by the terminal device to a limitation on out-of-band emission.

An embodiment of a second aspect of the present disclosure provides a power determination method. The method is performed by a network device and includes: sending indication information to a terminal device; where the indication information is to determine out-of-band emission limitation information of the terminal device, to determine a power of the terminal device according to the out-of-band emission limitation information.

Optionally, the out-of-band emission limitation information includes at least one of: an adjacent channel leakage ratio (ACLR), out-of-band emission, or out-of-band spurious emission.

Optionally, the indication information is of at least one bit for indicating whether the terminal device may relax a limitation on out-of-band emission.

Optionally, the indication information is of multiple (two or more) bits for indicating a degree of relaxation which is applied by the terminal device to a limitation on out-of-band emission.

Optionally, the method further includes: receiving a power of the terminal device sent by the terminal device.

An embodiment of a third aspect of the present disclosure provides a power determination apparatus. The apparatus is applied to a terminal device, and the apparatus includes:

a processing unit, configured for determining out-of-band emission limitation information of the terminal device; and

where the processing unit is further configured for determining a power of the terminal device according to the out-of-band emission limitation information.

Optionally, the processing unit is specifically configured for: receiving indication information sent by a network device, and determining the out-of-band emission limitation information of the terminal device according to the indication information.

Optionally, the processing unit is specifically configured for: determining location information of the terminal device, and determining the out-of-band emission limitation information of the terminal device according to the location information.

Optionally, the out-of-band emission limitation information includes at least one of: an adjacent channel leakage ratio (ACLR), out-of-band emission, or out-of-band spurious emission.

Optionally, the processing unit is specifically configured for: determining a power reduction value according to the out-of-band emission limitation information, a time-frequency resource location of the terminal device, the number of resource blocks, and a modulation manner of the terminal device; and determining the power of the terminal device according to the power reduction value.

Optionally, the processing unit is specifically configured for: determining a power offset value according to the out-of-band emission limitation information; determining a reference power reduction value according to the time-frequency resource location of the terminal device, the number of the resource blocks, and the modulation manner of the terminal device; and determining the power reduction value according to the reference power reduction value and the power offset value.

Optionally, the apparatus further includes a transceiving unit, configured for sending the power of the terminal device to a network device.

Optionally, the indication information is of at least one bit for indicating whether the terminal device may relax a limitation on out-of-band emission.

Optionally, the indication information is of multiple (two or more) bits for indicating a degree of relaxation which is applied by the terminal device to a limitation on out-of-band emission.

An embodiment of a fourth aspect of the present disclosure provides a power determination apparatus. The apparatus is applied to a network device, and the apparatus includes:

a transceiving unit, configured for sending indication information to a terminal device;
where the indication information is to determine out-of-band emission limitation information of the terminal device, to determine a power of the terminal device according to the out-of-band emission limitation information.

Optionally, the out-of-band emission limitation information includes at least one of: an adjacent channel leakage ratio (ACLR), out-of-band emission, or out-of-band spurious emission.

Optionally, the indication information is of at least one bit for indicating whether the terminal device may relax a limitation on out-of-band emission.

Optionally, the indication information is of multiple (two or more) bits for indicating a degree of relaxation which is applied by the terminal device to a limitation on out-of-band emission.

Optionally, the transceiving unit is further configured for receiving a power of the terminal device sent by the terminal device.

An embodiment of a fifth aspect of the present disclosure provides a communication apparatus. The apparatus includes a processor and a memory. The memory stores a computer program, and the processor, when executing the computer program stored in the memory, causes the apparatus to perform the power determination method in the embodiment of the first aspect.

An embodiment of a sixth aspect of the present disclosure provides a communication apparatus. The apparatus includes a processor and a memory. The memory stores a computer program, and the processor, when executing the computer program stored in the memory, causes the apparatus to perform the power determination method in the embodiment of the second aspect.

An embodiment of a seventh aspect of the present disclosure provides a communication apparatus. The apparatus includes a processor and an interface circuit. The interface circuit is configured for receiving code instructions and transmitting the code instructions to the processor, and the processor is configured for executing the code instructions to cause the apparatus to perform the power determination method in the embodiment of the first aspect.

An embodiment of an eighth aspect of the present disclosure provides a communication apparatus. The apparatus includes a processor and an interface circuit. The interface circuit is configured for receiving code instructions and transmitting the code instructions to the processor, and the processor is configured for executing the code instructions to cause the apparatus to perform the power determination method in the embodiment of the second aspect.

An embodiment of a ninth aspect of the present disclosure provides a computer-readable storage medium, configured for storing instructions. The instructions, when executed, implement the power determination method in the embodiment of the first aspect.

An embodiment of a tenth aspect of the present disclosure provides a computer-readable storage medium, configured for storing instructions. The instructions, when executed, implement the power determination method in the embodiment of the second aspect.

An embodiment of an eleventh aspect of the present disclosure provides a computer program. The computer program, when executed by a computer, causes the computer to perform the power determination method in the embodiment of the first aspect.

An embodiment of a twelfth aspect of the present disclosure provides a computer program. The computer program, when executed by a computer, causes the computer to perform the power determination method in the embodiment of the second aspect.

According to the power determination methods and apparatuses provided in the embodiments of the present disclosure, the out-of-band emission limitation information of the terminal device is determined, and the power of the terminal device is determined according to the out-of-band emission limitation information, such that the terminal device can determine different powers according to different limitations on out-of-band emission, and determine different power reduction values according to different situations, which can reduce the unnecessary power reduction in some special situations, increase the uplink coverage of the terminal device, and effectively improve communication efficiency and quality of communication links.

Additional aspects and advantages of the present disclosure will be set forth in part in the following description, and a part thereof will become apparent from the following description or be learned by a practice of the present disclosure.

## BRIEF DESCRIPTION OF DRAWINGS

In order to more clearly illustrate technical solutions in the embodiments of the present disclosure or in the background, accompanying drawings that need to be used in the embodiments of the present disclosure or the background will be described below.

FIG. 1 is a schematic architectural diagram of a communication system provided by an embodiment of the present disclosure.

FIG. 2 is a schematic flowchart of a power determination method provided by an embodiment of the present disclosure.

FIG. 3 is a schematic flowchart of a power determination method provided by an embodiment of the present disclosure.

FIG. 4 is a schematic flowchart of a power determination method provided by an embodiment of the present disclosure.

FIG. 5 is a schematic flowchart of a power determination method provided by an embodiment of the present disclosure.

FIG. 6 is a schematic flowchart of a power determination method provided by an embodiment of the present disclosure.

FIG. 7 is a schematic flowchart of a power determination method provided by an embodiment of the present disclosure.

FIG. 8 is a schematic flowchart of a power determination method provided by an embodiment of the present disclosure.

FIG. 9 is a schematic structural diagram of a power determination apparatus provided by an embodiment of the present disclosure.

FIG. 10 is a schematic structural diagram of a power determination apparatus provided by an embodiment of the present disclosure.

FIG. 11 is another schematic structural diagram of a power determination apparatus provided by an embodiment of the present disclosure.

FIG. 12 is a schematic structural diagram of a chip provided by an embodiment of the present disclosure.

## DETAILED DESCRIPTION

Exemplary embodiments will be described in detail herein, with examples thereof represented in the accompanying drawings. When the following description involves the accompanying drawings, same numerals in different figures represent same or similar elements unless otherwise indicated. Implementations described in the following exemplary embodiments do not represent all implementations consistent with embodiments of the present disclosure. On the contrary, they are only examples of apparatuses and methods that are consistent with some aspects of embodiments of the present disclosure as detailed in the appended claims.

Terms used in the embodiments of the present disclosure are only for a purpose of describing specific embodiments, and are not intended to limit the embodiments of the present disclosure. Singular forms, "a/an" and "the" used in the embodiments and the appended claims of the present disclosure are also intended to include majority forms, unless the context clearly indicates other meanings. It should also be understood that the term "and/or" used herein refers to and includes any or all possible combinations of one or more related listed items.

It should be understood that although terms, such as "first," "second," "third," etc., may be used in the embodiments of the present disclosure to describe various information, such information should not be limited by these terms. These terms are only used to distinguish a same type of information from each other. For example, without departing from a scope of the embodiments of the present disclosure, first information may also be referred to as second information, and similarly, the second information may also be referred to as the first information. Depending on the context, terms "if" and "in case of" used herein may be interpreted as "when," "while," or "in response to determining."

Embodiments of the present disclosure are described in detail below. Examples of the embodiments are shown in the accompanying drawings. Same or similar reference signs throughout represent same or similar elements. The embodiments described below with reference to the accompanying drawings are exemplary and intended to explain the present disclosure, but cannot be understood as limiting the present disclosure.

In order to better understand a power determination method disclosed in the embodiments of the present disclosure, a communication system applicable to the embodiments of the present disclosure is described firstly below.

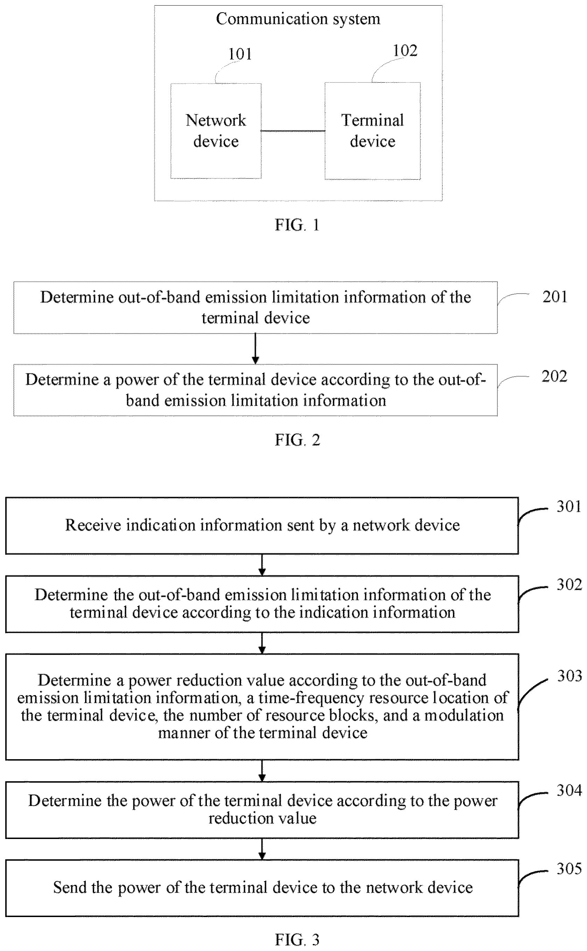

Referring to FIG. 1, FIG. 1 is a schematic architectural diagram of a communication system provided by an embodiment of the present disclosure. The communication system may include, but is not limited to, one first network device, one second network device, and one terminal device. The number of devices and forms of the devices shown in FIG. 1 are only exemplary and do not constitute limitations on the embodiments of the present disclosure. In a practical application, the communication system may include two or more network devices and two or more terminal devices. The case that the communication system shown in FIG. 1 includes one network device 110 and one terminal device 102 is taken as an example.

It should be noted that technical solutions of the embodiments of the present disclosure may be applied to various communication systems, for example, a long term evolution (LTE) system, a fifth generation (5G) mobile communication system, a 5G new radio (NR) system, or other future new mobile communication systems, etc.

The network device 101 in the embodiments of the present disclosure is an entity for sending or receiving a signal on a network side. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system, etc. Specific technologies and specific device forms used by the network device are not limited in the embodiments of the present disclosure. The network device provided in the embodiments of the present disclosure may be composed of a central unit (CU) and a distributed unit (DU). The CU may also be referred to as a control unit. A protocol layer of the network device, for example a base station, may be split by using a structure of a CU-DU. Functions of a part of the protocol layer are centrally controlled by the CU, and functions of the remaining part or all of the protocol layer are distributed in the DU, such that the CU centrally controls the DU.

The terminal device 102 in the embodiments of the present disclosure is an entity for receiving or sending a signal on a user-side, for example a mobile phone. The terminal device may also be referred to as a terminal, user equipment (UE), a mobile station (MS), a mobile terminal (MT), etc. The terminal device may be a car with a communication function, a smart car, a mobile phone, a wearable device, a Pad, a computer with a wireless transceiving function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, a wireless terminal device in a smart home, etc. Specific technologies and specific device forms used by the terminal device are not limited in the embodiments of the present disclosure.

In an LTE or 5G NR system, the terminal device 102 allows a certain power reduction, that is, MPR (maximum power reduction), to meet in-band and out-of-band emission requirements. The MPR defines an allowable amount of reduction in a maximum power class for a particular combination of all modulation manners and the number of allocated resource blocks. A size of the power reduction has a certain impact on a maximum power configuration allowed by the terminal device 102. The larger the power reduction is, the smaller a power allowed by the terminal device 102 is, which will have a certain impact on uplink coverage of the terminal device 102.

The power reduction of the terminal device 102 mainly depends on the in-band and out-of-band emission requirements, and the out-of-band emission requirement mainly depends on requirements of regulations. However, in some special situations, for example, in some special places that are rarely visited by humans, such as public seas, deserts, high mountains, etc., the power reduction required by the regulations may result in reduced coverage of the terminal device 102, thereby impacting communication quality of the terminal device 102.

Therefore, in certain special situations, for example, in some special places that are rarely visited by humans, such as the public seas, the deserts, the high mountains, etc., the limitation on the out-of-band emission of the terminal device 102 may not need to comply with the out-of-band emission requirement in the general situations, and the limitation on the out-of-band emission of the terminal device 102 may be relaxed, such that unnecessary power reduction is reduced in certain conditions, which can help increase the uplink coverage of the terminal device 102 and improve communication efficiency and communication quality.

In the embodiments of the present disclosure, the out-of-band emission limitation information of the terminal device is determined, and the power of the terminal device is determined according to the out-of-band emission limitation information, such that the terminal device can determine different powers according to different limitations on out-of-band emission, and determine different power reduction values according to different situations, which can reduce the unnecessary power reduction in some special situations, increase the uplink coverage of the terminal device, and effectively improve communication efficiency and quality of communication links.

It can be understood that the communication system described in the embodiments of the present disclosure is used to describe the technical solutions in the embodiments of the present disclosure more clearly, and does not constitute a limitation on the technical solutions provided in the embodiments of the present disclosure. Those skilled in the art may know that with evolution of system architectures and emergence of new business scenarios, the technical solutions provided in the embodiments of the present disclosure are also applicable to similar technical problems.

The power determination methods and apparatuses provided in the present disclosure are described in detail below with reference to the accompanying drawings.

Referring to FIG. 2, FIG. 2 is a schematic flowchart of a power determination method provided by an embodiment of the present disclosure. It should be noted that the power determination method in the embodiment of the present disclosure is performed by a terminal device. As shown in FIG. 2, the method may include the following steps 201-202.

At step 201, out-of-band emission limitation information of the terminal device is determined.

The out-of-band emission limitation information refers to information for limiting the out-of-band emission of the terminal device, that is, a requirement for the out-of-band emission of the terminal device.

When the terminal device performs signal emission, because internal elements and components are components in a non-ideal condition, the internal elements and components are more or less nonlinearity, and in signal modulation and signal emission processes, some signals within an un-stipulated frequency range are generated, that is, emission of one or more frequencies exceeding a necessary bandwidth. In this way, in a communication system, out-of-band emission of a terminal device may cause interference to communication of other devices in the system, and therefore, the out-of-band emission of the terminal device is generally limited and required.

In some implementations, the out-of-band emission limitation information includes at least one of an adjacent channel leakage ratio (ACLR), out-of-band emission, or out-of-band spurious emission.

The adjacent channel leakage ratio (ACLR) is a ratio of a filtered average power centered on a specified channel frequency to a filtered average power centered on an adjacent channel frequency.

Optionally, the out-of-band emission limitation information is determined according to a geographic feature of a deployment location for a serving cell in which the terminal device is located or requirements of related regulations.

It can be understood that the out-of-band emission limitation information may be at least one of a lower limit value of the adjacent channel leakage ratio (ACLR), an upper limit value of the out-of-band emission, or an upper limit value of the out-of-band spurious emission, which means that at least one of the adjacent channel leakage ratio (ACLR), the out-of-band emission, or the out-of-band spurious emission cannot exceed the limitation.

In some implementations, the terminal device receives the indication information sent by the network device, and determines the out-of-band emission limitation information of the terminal device according to the indication information.

That is, the network device sends the indication information to the terminal device according to a geographical feature of a deployment location for the network device or the requirements of the related regulations, to indicate the out-of-band emission limitation information of the terminal device.

Optionally, the indication information is of at least one bit.

In some implementations, the terminal device determines location information of the terminal device and determines the out-of-band emission limitation information of the terminal device according to the location information.

At step 202, a power of the terminal device is determined according to the out-of-band emission limitation information.

After determining the out-of-band emission limitation information, the terminal device determines the power of the terminal device according to the out-of-band emission limitation information.

Optionally, the terminal device determines a power reduction value of the terminal device according to the out-of-band emission limitation information, and then determines the power of the terminal device according to the power reduction value.

In some implementations, the terminal device determines the power reduction value according to the out-of-band emission limitation information, a time-frequency resource location of the terminal device, the number of resource blocks, and a modulation manner of the terminal device.

In some implementations, the terminal device determines a power offset value according to the out-of-band emission limitation information, determines a reference power reduction value according to the time-frequency resource location of the terminal device, the number of the resource blocks, and the modulation manner of the terminal device, and determines the power reduction value according to the reference power reduction value and the power offset value.

The time-frequency resource location of the terminal device is a location of a time-frequency resource allocated by the terminal device in a transmission bandwidth configuration, and includes generally an inner time-frequency resource allocation, an outer time-frequency resource allocation, and an edge time-frequency resource allocation. The inner time-frequency resource allocation may further include a region 1 and a region 2.

It can be understood that there may be different definitions of the time-frequency resource location in different application scenarios, that is, there may be different definitions of which time-frequency resource allocation belongs to the inner time-frequency resource allocation, which time-frequency resource allocation belongs to the outer time-frequency resource allocation, and which time-frequency resource allocation belongs to the edge time-frequency resource allocation.

Optionally, the time-frequency resource in the embodiment of the present disclosure is a resource block (RB).

In the embodiments of the present disclosure, after determining the power of the terminal device, the terminal device may further send the determined power to the network device, such that the network device configures a power for the terminal device according to the determined power.

To sum up, the out-of-band emission limitation information of the terminal device is determined, and the power of the terminal device is determined according to the out-of-band emission limitation information, such that the terminal device can determine different powers according to different limitations on out-of-band emission, and determine different power reduction values according to different situations, which can reduce the unnecessary power reduction in some special situations, increase the uplink coverage of the terminal device, and effectively improve communication efficiency and quality of communication links.

Referring to FIG. 3, FIG. 3 is a schematic flowchart of a power determination method provided by an embodiment of the present disclosure. It should be noted that the power determination method in the embodiment of the present disclosure is performed by the terminal device. As shown in FIG. 3, the method may include the following steps 301-305.

At step 301, indication information sent by a network device is received.

The indication information is sent by the network device to the terminal device, and is to determine the out-of-band emission limitation information of the terminal device.

The network device determines the out-of-band emission limitation information of the terminal device according to the geographical feature of the deployment location for the network device or the requirements of the related regulations, and indicates the terminal device to determine the out-of-band emission limitation information by the indication information.

Optionally, the out-of-band emission limitation information includes at least one of: an adjacent channel leakage ratio (ACLR), out-of-band emission, or out-of-band spurious emission.

In some implementations, the indication information sent by the network device is of one bit, and the indication information is to indicate whether the terminal device may relax a limitation on out-of-band emission.

Optionally, when the indication information is 0, the indication information indicates that the terminal device may relax the limitation on the out-of-band emission, and when the indication information is 1, the indication information indicates that the terminal device may not relax the limitation on the out-of-band emission; or, when the indication information is 1, the indication information indicates that the terminal device may relax the limitation on the out-of-band emission, and when the indication information is 0, the indication information indicates that the terminal device may not relax the limitation on the out-of-band emission.

It can be understood that, after receiving the indication information indicating that the terminal device may relax the limitation on the out-of-band emission, the terminal device may directly determine a default value of a degree of relaxation of the limitation on the out-of-band emission. Default values of different degrees of relaxation may be configured according to different environmental requirements, etc.

In some implementations, the indication information sent by the network device is of multiple (two or more) bits, and the indication information can indicate a degree of relaxation which is applied (or, degrees of relaxation which are applied) by the terminal device to a limitation on out-of-band emission.

For example, the indication information is of 2 bits, and the indication information 00, 01, 10, and 11 respectively correspond to different degrees of relaxation.

Optionally, the degree of relaxation is related to a variation amount of the out-of-band emission limitation information relative to a standard reference value, or the variation amount is a set ratio of the standard reference value.

It can be understood that the indication information and the degree of relaxation corresponding to the indication information may be configured differently according to different environmental requirements, etc.

In some implementations, the indication information sent by the network device is of multiple (two or more) bits, and the indication information can indicate specific values of the out-of-band emission limitation information of the terminal device; for example, several certain bits in the indication information represents a value of an adjacent channel leakage ratio (ACLR), and several certain bits in the indication information represents a value of spurious emission, etc.

At step 302, the out-of-band emission limitation information of the terminal device is determined according to the indication information.

In some implementations, the indication information sent by the network device is of one bit, and the indication information is to indicate whether the terminal device may relax a limitation on out-of-band emission.

Optionally, determining the out-of-band emission limitation information of the terminal device according to the indication information includes following operations that: there is a standard reference value for a limitation on the out-of-band emission of the terminal device; after receiving the indication information, sent by the network device, indicating that the terminal device may relax the limitation on the out-of-band emission, the terminal device determines that the variation amount of the out-of-band emission limitation information relative to the standard reference value is a set ratio of the standard reference value, or the terminal device determines the variation amount of the out-of-band emission limitation information relative to the standard reference value.

The standard reference value refers to out-of-band emission limitation information of the terminal device before determining that the terminal device can relax the limitation on the out-of-band emission, that is, out-of-band emission limitation information of the terminal device when the terminal device does not relax the limitation on the out-of-band emission. The terminal device may determine the standard reference value. It can be understood that the standard reference value may be dynamically configured and adjusted according to factors such as a capability of the terminal device, an environment in which the terminal device is located, requirements of related regulations, etc.

It can be understood that when the indication information is 0, the indication information indicates that the terminal device may relax the limitation on the out-of-band emission, and when the indication information is 1, the indication information indicates that the terminal device may not relax the limitation on the out-of-band emission; or, when the indication information is 1, the indication information indicates that the terminal device may relax the limitation on the out-of-band emission, and when the indication information is 0, the indication information indicates that the terminal device may not relax the limitation on the out-of-band emission. After receiving the indication information indicating that the terminal device may relax the limitation on the out-of-band emission, a value of the determined set ratio or variation amount is related to the degree of relaxation, and different configurations may be performed according to different environmental requirements, etc. For example, the set ratio is 10% in certain scenarios, the set ratio is 20% in certain scenarios, etc. The set ratio represents a variation amplitude relative to the standard reference value, for example, the out-of-band emission limitation information is increased by a value of the set ratio relative to the standard reference value, the variation amount is m in certain scenarios, or the variation amount is n in certain scenarios.

It can be understood that relaxation of an adjacent channel leakage ratio (ACLR) limitation condition refers to reducing a lower limit value of the adjacent channel leakage ratio (ACLR), relaxation of an out-of-band emission limitation condition refers to increasing an upper limit value of the out-of-band emission, and relaxation of an out-of-band spurious emission limitation condition refers to increasing an upper limit value of the out-of-band spurious emission.

In some implementations, the indication information sent by the network device is of multiple (two or more) bits, and the indication information can indicate a degree of relaxation which is applied (or, degrees of relaxation which are applied) by the terminal device to a limitation on out-of-band emission.

Optionally, determining the out-of-band emission limitation information of the terminal device according to the indication information includes following operations that: there is a standard reference value for a limitation on the out-of-band emission of the terminal device; after receiving the indication information, sent by the network device, indicating that the terminal device may relax the limitation on the out-of-band emission, the terminal device determines that the variation amount of the out-of-band emission limitation information relative to the standard reference value is a ratio, corresponding to the indication information, of the standard reference value, or the terminal device determines that the variation amount of the out-of-band emission limitation information relative to the standard reference value is a value corresponding to the indication information.

The standard reference value refers to out-of-band emission limitation information of the terminal device before determining that the terminal device can relax the limitation on the out-of-band emission, that is, out-of-band emission limitation information of the terminal device when the terminal device does not relax the limitation on the out-of-band emission. The terminal device may determine the standard reference value. It can be understood that the standard reference value may be dynamically configured and adjusted according to factors such as a capability of the terminal device, an environment in which the terminal device is located, requirements of related regulations, etc.

For example, the indication information is 2 bits, a ratio corresponding to the indication information 00 is 0%, a ratio corresponding to the indication information 01 is 10%, a ratio corresponding to the indication information 10 is 20%, and a ratio corresponding to the indication information 11 is 30%. That is, after receiving the indication information 00, the terminal device determines that the variation amount of the out-of-band emission limitation information relative to the standard reference value is 0% of the standard reference value, that is, the terminal device may not relax the limitation on the out-of-band emission; after receiving the indication information 01, the terminal device determines that the variation amount of the out-of-band emission limitation information relative to the standard reference value is 10% of the standard reference value; after receiving the indication information 10, the terminal device determines that the variation amount of the out-of-band emission limitation information relative to the standard reference value is 20% of the standard reference value; and after receiving the indication information 11, the terminal device determines that the variation amount of the out-of-band emission limitation information relative to the standard reference value is 30% of the standard reference value.

Alternatively, a value corresponding to the indication information 00 is 0, a value corresponding to the indication information 01 is m1, a value corresponding to the indication information 10 is m2, and a value corresponding to the indication information 11 is m3. That is, after receiving the indication information 00, the terminal device determines that the variation amount of the out-of-band emission limitation information relative to the standard reference value is 0, that is, the terminal device may not relax the limitation on the out-of-band emission; after receiving the indication information 01, the terminal device determines that the variation amount of the out-of-band emission limitation information relative to the standard reference value is m1 (for example, m1 is added on basis of the standard reference value); after receiving the indication information 10, the terminal device determines that the variation amount of the out-of-band emission limitation information relative to the standard reference value is m2; and after receiving the indication information 11, the terminal device determines that the variation amount of the out-of-band emission limitation information relative to the standard reference value is m3.

It can be understood that relaxation of an adjacent channel leakage ratio (ACLR) limitation condition refers to reducing a lower limit value of the adjacent channel leakage ratio (ACLR), relaxation of an out-of-band emission limitation condition refers to increasing an upper limit value of the out-of-band emission, and relaxation of an out-of-band spurious emission limitation condition refers to increasing an upper limit value of the out-of-band spurious emission.

It can be understood that the indication information and the degree of relaxation corresponding to the indication information may be configured differently according to different environmental requirements, etc.

In some implementations, the indication information sent by the network device is of multiple (two or more) bits, and determining the out-of-band emission limitation information of the terminal device according to the indication information includes following operations that: the indication information can indicate specific values of the out-of-band emission limitation information of the terminal device; for example, several certain bits in the indication information represents a value of an adjacent channel leakage ratio (ACLR), and several certain bits in the indication information represents a value of spurious emission, etc.

At step 303, a power reduction value is determined according to the out-of-band emission limitation information, a time-frequency resource location of the terminal device, the number of resource blocks, and a modulation manner of the terminal device.

In some implementations, the terminal device stores at least one of: a correspondence relationship between the out-of-band emission limitation information and the power reduction value, a correspondence relationship between the time-frequency resource location of the terminal device and the power reduction value, a correspondence relationship between the number of resource blocks and the power reduction value, or a correspondence relationship between the modulation manner of the terminal device and the power reduction value.

Optionally, different out-of-band emission limitation information may correspond to different correspondence relationships.

Optionally, the above correspondence relationships are stored by at least one table, that is, the table includes the correspondence relationship between the out-of-band emission limitation information and the power reduction value, the correspondence relationship between the time-frequency resource location of the terminal device and the power reduction value, the correspondence relationship between the number of resource blocks and the power reduction value, and the correspondence relationship between the modulation manner of the terminal device and the power reduction value. Different out-of-band emission limitation information may correspond to different tables.

For example, a table 1 stores the correspondence relationship between the time-frequency resource location of the terminal device and the power reduction value, the correspondence relationship between the number of resource blocks and the power reduction value, and the correspondence relationship between the modulation manner of the terminal device and the power reduction value, when the variation amount of the out-of-band emission limitation information relative to the standard reference value is 0% of the standard reference value or the variation amount of the out-of-band emission limitation information relative to the standard reference value is 0; a table 2 stores the correspondence relationship between the time-frequency resource location of the terminal device and the power reduction value, the correspondence relationship between the number of resource blocks and the power reduction value, and the correspondence relationship between the modulation manner of the terminal device and the power reduction value, when the variation amount of the out-of-band emission limitation information relative to the standard reference value is 10% of the standard reference value or the variation amount of the out-of-band emission limitation information relative to the standard reference value is m; etc.

The time-frequency resource location of the terminal device is a location of a time-frequency resource allocated by the terminal device in a transmission bandwidth configuration, and includes generally an inner time-frequency resource allocation, an outer time-frequency resource allocation, and an edge time-frequency resource allocation. The inner time-frequency resource allocation may further include a region 1 and a region 2.

It can be understood that there may be different definitions of the time-frequency resource location in different application scenarios, that is, there may be different definitions of which time-frequency resource allocation belongs to the inner time-frequency resource allocation, which time-frequency resource allocation belongs to the outer time-frequency resource allocation, and which time-frequency resource allocation belongs to the edge time-frequency resource allocation.

Optionally, the time-frequency resource in the embodiment of the present disclosure is a resource block (RB).

After determining the out-of-band emission limitation information, the terminal device may find a table corresponding to the out-of-band emission limitation information, and determine a corresponding power reduction value in the table according to the time-frequency resource location of the terminal device, the number of resource blocks, and the modulation manner of the terminal device.

In some implementations, different power classes of the terminal device may also correspond to different tables.

After determining the out-of-band emission limitation information, the terminal device may find a table corresponding collectively to a power class of the terminal device and the out-of-band emission limitation information, and determine a corresponding power reduction value in the table according to the time-frequency resource location of the terminal device, the number of resource blocks, and the modulation manner of the terminal device.

At step 304, the power of the terminal device is determined according to the power reduction value.

In some implementations, the terminal device determines a maximum allowed configured power $P_{CMAX,f,c}$ of the terminal device according to the power reduction value.

Optionally, there is $P_{CMAX\_L,f,c} \leq P_{CMAX,f,c} \leq P_{CMAX\_H,f,c}$, where

$$P_{CMAX\_L,f,c} = MIN \{P_{EMAX,c} - \Delta T_{C,c}, (P_{PowerClass} - \Delta P_{PowerClass}) - MAX(MAX(MPR_c + \Delta MPR_c, A\text{-}MPR_c) + \Delta T_{IB,c} + \Delta T_{C,c} + \Delta T_{RxSRS}, P\text{-}MPR_c)\},$$

$$P_{CMAX\_H,f,c} = MIN \{P_{EMAX,c}, \quad P_{PowerClass} - \Delta P_{PowerClass}\}.$$

$P_{CMAX,f,c}$ represents the maximum allowed configured power of the terminal device, $P_{CMAX\_L,f,c}$ represents a lower limit of the maximum allowed configured power of the terminal device, $P_{CMAX\_H,f,c}$ represents an upper limit of the maximum allowed configured power of the terminal device, MIN() represents taking a minimum value of content in parentheses, MAX() represents taking a maximum value of content in parentheses, $P_{EMAX,c}$ represents a power configured by the network device for the terminal device, $P_{PowerClass}$ represents a power level of the terminal device and is related to a capability of the terminal device, $MPR_c$ represents maximum power reduction, that is, the power reduction value determined in step 303, $A\text{-}MPR_c$ represents additional power reduction, and $P\text{-}MPR_c$ represents power reduction required for electromagnetic energy absorption based on human body safety.

At step 305, the power of the terminal device is sent to the network device.

In the embodiment of the present disclosure, after determining the power of the terminal device, the terminal device sends the determined power to the network device, such that the network device configures a power for the terminal device according to the determined power.

To sum up, the indication information sent by the network device is received, the out-of-band emission limitation information of the terminal device is determined according to the indication information, the power reduction value is determined according to the out-of-band emission limitation information, the time-frequency resource location of the terminal device, the number of resource blocks, and the modulation manner of the terminal device, and the power of the terminal device is determined according to the power reduction value, such that the terminal device can determine different powers according to different limitations on out-of-band emission, and determine different power reduction values according to different situations, which can reduce the unnecessary power reduction in some special situations, increase the uplink coverage of the terminal device, and effectively improve communication efficiency and quality of communication links.

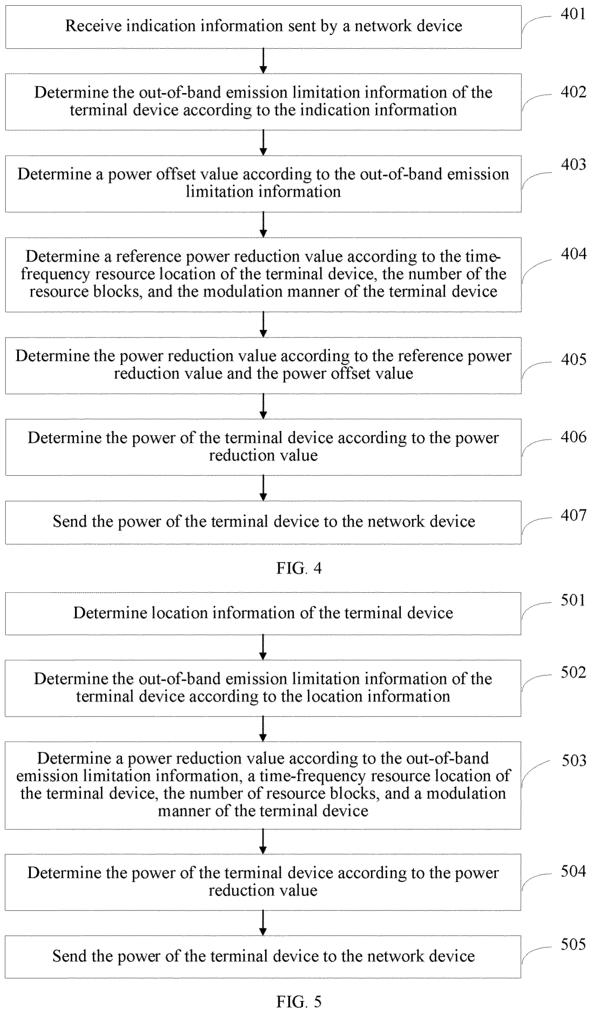

Referring to FIG. 4, FIG. 4 is a schematic flowchart of a power determination method provided by an embodiment of the present disclosure. It should be noted that the power determination method in the embodiment of the present disclosure is performed by the terminal device. As shown in FIG. 4, the method may include the following steps 401-407.

At step 401, indication information sent by a network device is received.

At step 402, the out-of-band emission limitation information of the terminal device is determined according to the indication information.

In the embodiment of the present disclosure, step 401 and step 402 may be respectively implemented in any manner in various embodiments of the present disclosure, which is not limited in the embodiment of the present disclosure, and will not be repeated.

At step 403, a power offset value is determined according to the out-of-band emission limitation information.

The power offset value refers to an offset amount for offsetting a reference power reduction value.

In some implementations, different out-of-band emission limitation information corresponds to different power offset values.

For example, when the variation amount of the out-of-band emission limitation information relative to the standard reference value is 0% of the standard reference value or the variation amount of the out-of-band emission limitation information relative to the standard reference value is 0, a corresponding power offset value is offset1; when the variation amount of the out-of-band emission limitation information relative to the standard reference value is 10% of the standard reference value or the variation amount of the out-of-band emission limitation information relative to the standard reference value is m, a corresponding power offset value is offset2; etc.

It can be understood that power offset values corresponding to the out-of-band emission limitation information may be configured differently according to different environmental requirements, etc., and the offset values may also be configured to 0.

In some implementations, the terminal device may also determine, according to the out-of-band emission limitation information, whether the terminal device needs to configure an offset value. For example, when the terminal device determines that the variation amount of the out-of-band emission limitation information relative to the standard reference value is 0% of the standard reference value, or the variation amount of the out-of-band emission limitation information relative to the standard reference value is 0, or when the terminal device receives indication information, sent by the network device, indicating that the terminal device may not relax the limitation on the out-of-band emission, the terminal device does not need to configure the offset value.

At step 404, a reference power reduction value is determined according to the time-frequency resource location of the terminal device, the number of the resource blocks, and the modulation manner of the terminal device.

In some implementations, the terminal device stores at least one of: a correspondence relationship between the time-frequency resource location of the terminal device and the reference power reduction value, a correspondence relationship between the number of resource blocks and the reference power reduction value, or a correspondence relationship between the modulation manner of the terminal device and the reference power reduction value.

Optionally, different power classes of the terminal device may correspond to different correspondence relationships.

Optionally, the above correspondence relationships are stored by at least one table, that is, the table includes the correspondence relationship between the time-frequency resource location of the terminal device and the reference power reduction value, the correspondence relationship between the number of resource blocks and the reference power reduction value, and the correspondence relationship between the modulation manner of the terminal device and the reference power reduction value. Different power classes of the terminal device may correspond to different correspondence relationships.

For example, a table 1 stores the correspondence relationship between the time-frequency resource location of the terminal device and the reference power reduction value, the correspondence relationship between the number of resource blocks and the reference power reduction value, and the correspondence relationship between the modulation manner of the terminal device and the reference power reduction value, when the power class of the terminal device is 3; a table 2 stores the correspondence relationship between the time-frequency resource location of the terminal device and the reference power reduction value, the correspondence relationship between the number of resource blocks and the reference power reduction value, and the correspondence relationship between the modulation manner of the terminal device and the reference power reduction value, when the power class of the terminal device is 2; etc.

The time-frequency resource location of the terminal device is a location of a time-frequency resource allocated by the terminal device in a transmission bandwidth configuration, and includes generally an inner time-frequency resource allocation, an outer time-frequency resource allocation, and an edge time-frequency resource allocation. The inner time-frequency resource allocation may further include a region 1 and a region 2.

It can be understood that there may be different definitions of the time-frequency resource location in different application scenarios, that is, there may be different definitions of which time-frequency resource allocation belongs to the inner time-frequency resource allocation, which time-frequency resource allocation belongs to the outer time-frequency resource allocation, and which time-frequency resource allocation belongs to the edge time-frequency resource allocation.

Optionally, the time-frequency resource in the embodiment of the present disclosure is a resource block (RB).

The terminal device may find, according to a power class of the terminal device, a table corresponding to the power class, and determine a corresponding reference power reduction value in the table according to the time-frequency resource location of the terminal device, the number of resource blocks, and the modulation manner of the terminal device.

At step 405, the power reduction value is determined according to the reference power reduction value and the power offset value.

After determining the reference power reduction value and the power offset value, the terminal device determines the power reduction value of the terminal device according to the reference power reduction value and the power offset value.

In some implementations, the power reduction value is equal to a value obtained by subtracting the power offset value from the reference power reduction value.

At step 406, the power of the terminal device is determined according to the power reduction value.

At step 407, the power of the terminal device is sent to the network device.

In the embodiment of the present disclosure, step 406 and step 407 may be respectively implemented in any manner in various embodiments of the present disclosure, which is not limited in the embodiment of the present disclosure, and will not be repeated.

To sum up, the indication information sent by the network device is received, the out-of-band emission limitation information of the terminal device is determined according to the indication information, a power offset value is determined according to the out-of-band emission limitation information, a reference power reduction value is determined according to the time-frequency resource location of the terminal device, the number of the resource blocks, and the modulation manner of the terminal device, the power reduction value is determined according to the reference power reduction value and the power offset value, and the power of the terminal device is determined according to the power reduction value, such that the terminal device can determine different powers according to different limitations on out-of-band emission, and determine different power reduction values according to different situations, which can reduce the unnecessary power reduction in some special situations, increase the uplink coverage of the terminal device, and effectively improve communication efficiency and quality of communication links.

Referring to FIG. 5, FIG. 5 is a schematic flowchart of a power determination method provided by an embodiment of the present disclosure. It should be noted that the power determination method in the embodiment of the present disclosure is performed by the terminal device. As shown in FIG. 5, the method may include the following steps 501-505.

At step 501, location information of the terminal device is determined.

Optionally, the terminal device may determine location information of the terminal device according to a built-in positioning module or according to received related information sent by the network device.

At step 502, the out-of-band emission limitation information of the terminal device is determined according to the location information.

Optionally, when determining that the location information of the terminal device is in a preset region, the terminal device determines that the terminal device may relax the limitation on the out-of-band emission of the terminal device.

In some implementations, different preset regions correspond to different out-of-band emission limitation information.

It can be understood that when the location information is not in the preset region, the terminal device may not relax the limitation on out-of-band emission of the terminal device.

Optionally, there is a standard reference value for a limitation on the out-of-band emission of the terminal device; after the terminal device determines that the location information of the terminal device is in the preset region and the terminal device may relax the limitation on the out-of-band emission, the terminal device determines that the variation amount of the out-of-band emission limitation information relative to the standard reference value is a set ratio of the standard reference value, or the terminal device determines the variation amount of the out-of-band emission limitation information relative to the standard reference value.

In some implementations, different preset regions may be configured with different preset ratios to correspond to different out-of-band emission limitation information.

For example, the terminal device determines that the location information of the terminal device is a certain desert, and determines that the terminal device may relax the limitation on the out-of-band emission of the terminal device, and the set ratio is 20% or the value of the variation amount is 10; the terminal device determines that the location information of the terminal device is a certain mountainous region, and determines that the terminal device may relax the limitation on the out-of-band emission of the terminal device, and the set ratio is 10% or the value of the variation amount is 5; etc.

It can be understood that, when the location information is not in the preset region, the terminal device may not relax the limitation on the out-of-band emission of the terminal device, and the terminal device determines that the variation amount of the out-of-band emission limitation information relative to the standard reference value is 0% of the standard reference value.

At step 503, a power reduction value is determined according to the out-of-band emission limitation information, a time-frequency resource location of the terminal device, the number of resource blocks, and a modulation manner of the terminal device.

At step 504, the power of the terminal device is determined according to the power reduction value.

At step 505, the power of the terminal device is sent to the network device.

In the embodiment of the present disclosure, step 503, step 504, and step 505 may be respectively implemented in any manner in various embodiments of the present disclosure, which is not limited in the embodiment of the present disclosure, and will not be repeated.

To sum up, location information of the terminal device is determined, the out-of-band emission limitation information of the terminal device is determined according to the location information, the power reduction value is determined according to the out-of-band emission limitation information, the time-frequency resource location of the terminal device, the number of resource blocks, and the modulation manner of the terminal device, and the power of the terminal device is determined according to the power reduction value, such that the terminal device can determine different powers according to different limitations on out-of-band emission, and determine different power reduction values according to different situations, which can reduce the unnecessary power reduction in some special situations, increase the uplink coverage of the terminal device, and effectively improve communication efficiency and quality of communication links.

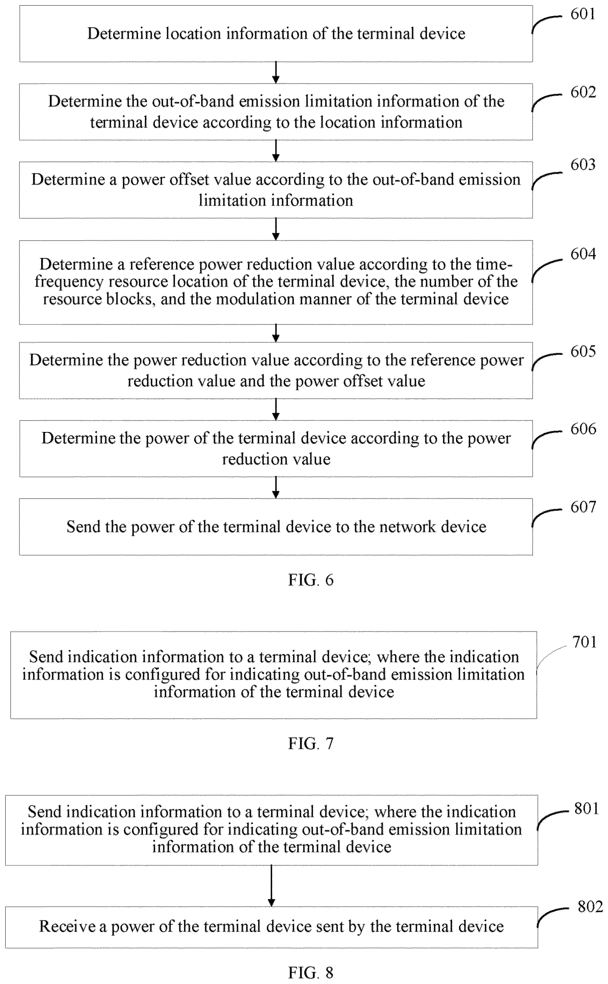

Referring to FIG. 6, FIG. 6 is a schematic flowchart of a power determination method provided by an embodiment of the present disclosure. It should be noted that the power determination method in the embodiment of the present disclosure is performed by the terminal device. As shown in FIG. 6, the method may include the following steps 601-607.

At step 601, location information of the terminal device is determined.

Optionally, the terminal device may determine location information of the terminal device according to a built-in positioning module or according to received related information sent by the network device.

At step 602, the out-of-band emission limitation information of the terminal device is determined according to the location information.

Optionally, when determining that the location information of the terminal device is in a preset region, the terminal device determines that the terminal device may relax the limitation on the out-of-band emission of the terminal device.

In some implementations, different preset regions correspond to different out-of-band emission limitation information.

It can be understood that when the location information is not in the preset region, the terminal device may not relax the limitation on out-of-band emission of the terminal device.

Optionally, there is a standard reference value for a limitation on the out-of-band emission of the terminal device; after the terminal device determines that the location information of the terminal device is in the preset region and the terminal device may relax the limitation on the out-of-band emission, the terminal device determines that the variation amount of the out-of-band emission limitation information relative to the standard reference value is a set ratio of the standard reference value.

In some implementations, different preset regions may be configured with different preset ratios to correspond to different out-of-band emission limitation information.

For example, the terminal device determines that the location information of the terminal device is a certain desert, and determines that the terminal device may relax the limitation on the out-of-band emission of the terminal device, and the set ratio is 20% or the value of the variation amount is n; the terminal device determines that the location information of the terminal device is a certain mountainous region, and determines that the terminal device may relax the limitation on the out-of-band emission of the terminal device, and the set ratio is 10% or the value of the variation amount is m; etc.

It can be understood that, when the location information is not in the preset region, the terminal device may not relax the limitation on the out-of-band emission of the terminal device, and the terminal device determines that the variation amount of the out-of-band emission limitation information relative to the standard reference value is 0% of the standard reference value.

At step 603, a power offset value is determined according to the out-of-band emission limitation information.

The power offset value refers to an offset amount for offsetting the reference power reduction value.

In some implementations, different out-of-band emission limitation information corresponds to different power offset values.

For example, when the variation amount of the out-of-band emission limitation information relative to the standard reference value is 0% of the standard reference value or the variation amount of the out-of-band emission limitation information relative to the standard reference value is 0, a corresponding power offset value is offset1; when the variation amount of the out-of-band emission limitation information relative to the standard reference value is 10% of the standard reference value or the variation amount of the out-of-band emission limitation information relative to the standard reference value is m1, a corresponding power offset value is offset2; etc.

It can be understood that power offset values corresponding to the out-of-band emission limitation information may be configured differently according to different environmental requirements, etc., and the offset values may also be configured to 0.

In some implementations, the terminal device may also determine, according to the out-of-band emission limitation information, whether the terminal device needs to configure an offset value. For example, when the terminal device determines that the variation amount of the out-of-band emission limitation information relative to the standard reference value is 0% of the standard reference value, or the variation amount of the out-of-band emission limitation information relative to the standard reference value is 0, or when the location information of the terminal device is not in the preset region, the terminal device does not need to configure the offset value.

At step 604, a reference power reduction value is determined according to the time-frequency resource location of the terminal device, the number of the resource blocks, and the modulation manner of the terminal device.

At step 605, the power reduction value is determined according to the reference power reduction value and the power offset value.

At step 606, the power of the terminal device is determined according to the power reduction value.

At step 607, the power of the terminal device is sent to the network device.

In the embodiment of the present disclosure, step 604, step 605, step 606, and step 607 may be respectively implemented in any manner in various embodiments of the present disclosure, which is not limited in the embodiment of the present disclosure, and will not be repeated.

To sum up, location information of the terminal device is determined, the out-of-band emission limitation information of the terminal device is determined according to the location information, a power offset value is determined according to the out-of-band emission limitation information, a reference power reduction value is determined according to the time-frequency resource location of the terminal device, the number of the resource blocks, and the modulation manner of the terminal device, the power reduction value is determined according to the reference power reduction value and the power offset value, and the power of the terminal device is determined according to the power reduction value, such that the terminal device can determine different powers according to different limitations on out-of-band emission, and determine different power reduction values according to different situations, which can reduce the unnecessary power reduction in some special situations, increase the uplink coverage of the terminal device, and effectively improve communication efficiency and quality of communication links.

Referring to FIG. 7, FIG. 7 is a schematic flowchart of a power determination method provided by an embodiment of the present disclosure. It should be noted that the power determination method in the embodiment of the present disclosure is performed by a network device. As shown in FIG. 7, the method may include the following step 701.

At step 701, indication information is sent to a terminal device; where the indication information is to indicate out-of-band emission limitation information of the terminal device.

The indication information is sent by the network device to the terminal device, and is to determine the out-of-band emission limitation information of the terminal device. The terminal device can determine a power of the terminal device according to the out-of-band emission limitation information.

Optionally, the network device determines the out-of-band emission limitation information of the terminal device according to the geographical feature of the deployment location for the network device or the requirements of the related regulations, and indicates the terminal device to determine the out-of-band emission limitation information by the indication information.

Optionally, the out-of-band emission limitation information includes at least one of: an adjacent channel leakage ratio (ACLR), out-of-band emission, or out-of-band spurious emission.

It can be understood that the out-of-band emission limitation information may be at least one of a lower limit value of the adjacent channel leakage ratio (ACLR), an upper limit value of the out-of-band emission, or an upper limit value of the out-of-band spurious emission, which means that at least one of the adjacent channel leakage ratio (ACLR), the out-of-band emission, or the out-of-band spurious emission cannot exceed a value of the limitation.

In some implementations, the indication information sent by the network device is of one bit, and the indication information is to indicate whether the terminal device may relax a limitation on out-of-band emission.

Optionally, when the indication information is 0, the indication information indicates that the terminal device may relax the limitation on the out-of-band emission, and when the indication information is 1, the indication information indicates that the terminal device may not relax the limitation on the out-of-band emission; or, when the indication information is 1, the indication information indicates that the terminal device may relax the limitation on the out-of-band emission, and when the indication information is 0, the indication information indicates that the terminal device may not relax the limitation on the out-of-band emission.

It can be understood that, after receiving the indication information indicating that the terminal device may relax the limitation on the out-of-band emission, the terminal device may directly determine a default value of a degree of relaxation of the limitation on the out-of-band emission. Default values of different degrees of relaxation may be configured according to different environmental requirements, etc.

In some implementations, the indication information sent by the network device is of multiple (two or more) bits, and the indication information can indicate a degree of relaxation which is applied (or, degrees of relaxation which are applied) by the terminal device to a limitation on out-of-band emission.

For example, the indication information is 2 bits, a degree of relaxation corresponding to the indication information 00 is 0% of the standard reference value, a degree of relaxation corresponding to the indication information 01 is 10% of the standard reference value, a degree of relaxation corresponding to the indication information 10 is 20% of the standard reference value, and a degree of relaxation corresponding to the indication information 11 is 30% of the standard reference value. That is, after receiving the indication information 00, the terminal device determines that the variation amount of the out-of-band emission limitation information relative to the standard reference value is 0% of the standard reference value, that is, the terminal device may not relax the limitation on the out-of-band emission; after receiving the indication information 01, the terminal device determines that the variation amount of the out-of-band emission limitation information relative to the standard reference value is 10% of the standard reference value; after receiving the indication information 10, the terminal device determines that the variation amount of the out-of-band emission limitation information relative to the standard reference value is 20% of the standard reference value; and after receiving the indication information 11, the terminal device determines that the variation amount of the out-of-band emission limitation information relative to the standard reference value is 30% of the standard reference value.

The standard reference value refers to out-of-band emission limitation information of the terminal device before determining that the terminal device can relax the limitation on the out-of-band emission, that is, out-of-band emission limitation information of the terminal device when the terminal device does not relax the limitation on the out-of-band emission. The terminal device may determine the standard reference value. It can be understood that the standard reference value may be dynamically configured and adjusted according to factors such as a capability of the terminal device, an environment in which the terminal device is located, requirements of related regulations, etc.

It can be understood that relaxation of an adjacent channel leakage ratio (ACLR) limitation condition refers to reducing a lower limit value of the adjacent channel leakage ratio (ACLR), relaxation of an out-of-band emission limitation condition refers to increasing an upper limit value of the out-of-band emission, and relaxation of an out-of-band spurious emission limitation condition refers to increasing an upper limit value of the out-of-band spurious emission.

It can be understood that the indication information and the degree of relaxation corresponding to the indication information may be configured differently according to different environmental requirements, etc.

In some implementations, the indication information sent by the network device is of multiple (two or more) bits, and the indication information can indicate specific values of the out-of-band emission limitation information of the terminal device; for example, several certain bits in the indication information represents a value of an adjacent channel leakage ratio (ACLR), and several certain bits in the indication information represents a value of spurious emission, etc.

To sum up, indication information is sent to a terminal device, where the indication information is to determine out-of-band emission limitation information of the terminal device, to determine the power of the terminal device according to the out-of-band emission limitation information, such that the terminal device can determine the out-of-band emission limitation information, determine different powers according to different limitations on out-of-band emission, and determine different power reduction values according to different situations, which can reduce the unnecessary power reduction in some special situations, increase the uplink coverage of the terminal device, and effectively improve communication efficiency and quality of communication links.

Referring to FIG. 8, FIG. 8 is a schematic flowchart of a power determination method provided by an embodiment of the present disclosure. It should be noted that the power determination method in the embodiment of the present disclosure is performed by a network device. As shown in FIG. 8, the method may include the following steps 801-802.

At step 801, indication information is sent to a terminal device; where the indication information is to indicate out-of-band emission limitation information of the terminal device.

The indication information is sent by the network device to the terminal device, and is to determine the out-of-band emission limitation information of the terminal device. The terminal device can determine a power of the terminal device according to the out-of-band emission limitation information.

Optionally, the network device determines the out-of-band emission limitation information of the terminal device according to the geographical feature of the deployment location for the network device or the requirements of the related regulations, and indicates the terminal device to determine the out-of-band emission limitation information by the indication information.

Optionally, the out-of-band emission limitation information includes at least one of: an adjacent channel leakage ratio (ACLR), out-of-band emission, or out-of-band spurious emission.

In some implementations, the indication information sent by the network device is of one bit, and the indication information is to indicate whether the terminal device may relax a limitation on out-of-band emission.

Optionally, when the indication information is 0, the indication information indicates that the terminal device may relax the limitation on the out-of-band emission, and when the indication information is 1, the indication information indicates that the terminal device may not relax the limitation on the out-of-band emission; or, when the indication information is 1, the indication information indicates that the terminal device may relax the limitation on the out-of-band emission, and when the indication information is 0, the indication information indicates that the terminal device may not relax the limitation on the out-of-band emission.

It can be understood that, after receiving the indication information indicating that the terminal device may relax the limitation on the out-of-band emission, the terminal device may directly determine a default value of a degree of relaxation of the limitation on the out-of-band emission. Default values of different degrees of relaxation may be configured according to different environmental requirements, etc.

In some implementations, the indication information sent by the network device is of multiple (two or more) bits, and the indication information can indicate a degree of relaxation which is applied (or, degrees of relaxation which are applied) by the terminal device to a limitation on out-of-band emission. The degree of relaxation is related to a variation amount of the out-of-band emission limitation information relative to a standard reference value, or the variation amount is related to a set ratio of the standard reference value.

The standard reference value refers to out-of-band emission limitation information of the terminal device before determining that the terminal device can relax the limitation on the out-of-band emission, that is, out-of-band emission limitation information of the terminal device when the terminal device does not relax the limitation on the out-of-band emission. The terminal device may determine the standard reference value. It can be understood that the standard reference value may be dynamically configured and adjusted according to factors such as a capability of the terminal device, an environment in which the terminal device is located, requirements of related regulations, etc.

For example, the indication information is 2 bits, a ratio corresponding to the indication information 00 is 0%, a ratio corresponding to the indication information 01 is 10%, a ratio corresponding to the indication information 10 is 20%, and a ratio corresponding to the indication information 11 is 30%. That is, after receiving the indication information 00, the terminal device determines that the variation amount of the out-of-band emission limitation information relative to the standard reference value is 0% of the standard reference value, that is, the terminal device may not relax the limitation on the out-of-band emission; after receiving the indication information 01, the terminal device determines that the variation amount of the out-of-band emission limitation information relative to the standard reference value is 10% of the standard reference value; after receiving the indication information 10, the terminal device determines that the variation amount of the out-of-band emission limitation information relative to the standard reference value is 20% of the standard reference value; and after receiving the indication information 11, the terminal device determines that the variation amount of the out-of-band emission limitation information relative to the standard reference value is 30% of the standard reference value.

Alternatively, a value of the variation amount corresponding to the indication information 00 is 0, a value of the variation amount corresponding to the indication information 01 is m1, a value of the variation amount corresponding to the indication information 10 is m2, and a value of the variation amount corresponding to the indication information 11 is m3. That is, after receiving the indication information 00, the terminal device determines that the variation amount of the out-of-band emission limitation information relative to the standard reference value is 0, that is, the terminal device may not relax the limitation on the out-of-band emission; after receiving the indication information 01, the terminal device determines that the variation amount of the out-of-band emission limitation information relative to the standard reference value is m1; after receiving the indication information 10, the terminal device determines that the variation amount of the out-of-band emission limitation information relative to the standard reference value is m2; and after receiving the indication information 11, the terminal device determines that the variation amount of the out-of-band emission limitation information relative to the standard reference value is m3.

It can be understood that relaxation of an adjacent channel leakage ratio (ACLR) limitation condition refers to reducing a lower limit value of the adjacent channel leakage ratio (ACLR), relaxation of an out-of-band emission limitation condition refers to increasing an upper limit value of the out-of-band emission, and relaxation of an out-of-band spurious emission limitation condition refers to increasing an upper limit value of the out-of-band spurious emission.

It can be understood that the indication information and the degree of relaxation corresponding to the indication information may be configured differently according to different environmental requirements, etc.

In some implementations, the indication information sent by the network device is of multiple (two or more) bits, and the indication information can indicate specific values of the out-of-band emission limitation information of the terminal device; for example, several certain bits in the indication information represents a value of an adjacent channel leakage ratio (ACLR), and several certain bits in the indication information represents a value of spurious emission, etc.

At step 802, a power of the terminal device sent by the terminal device is received.

In the embodiment of the present disclosure, after determining the power of the terminal device, the terminal device sends the determined power to the network device, such that the network device receives the power and configures a power for the terminal device according to the received power.

To sum up, indication information is sent to a terminal device, where the indication information is to determine out-of-band emission limitation information of the terminal device, to determine the power of the terminal device according to the out-of-band emission limitation information, and the power of the terminal device sent by the terminal device is received, such that the terminal device can determine the out-of-band emission limitation information, determine different powers according to different limitations on out-of-band emission, and determine different power reduction values according to different situations, which can reduce the unnecessary power reduction in some special situations, increase the uplink coverage of the terminal device, and effectively improve communication efficiency and quality of communication links.

Corresponding to the power determination methods provided in the above several embodiments, the present disclosure further provides power determination apparatuses. Because the power determination apparatuses provided in the embodiments of the present disclosure correspond to the methods provided in the above several embodiments, implementations in the power determination methods are also applicable to the power determination apparatuses provided in the following embodiments, which will not be described in detail in the following embodiments.

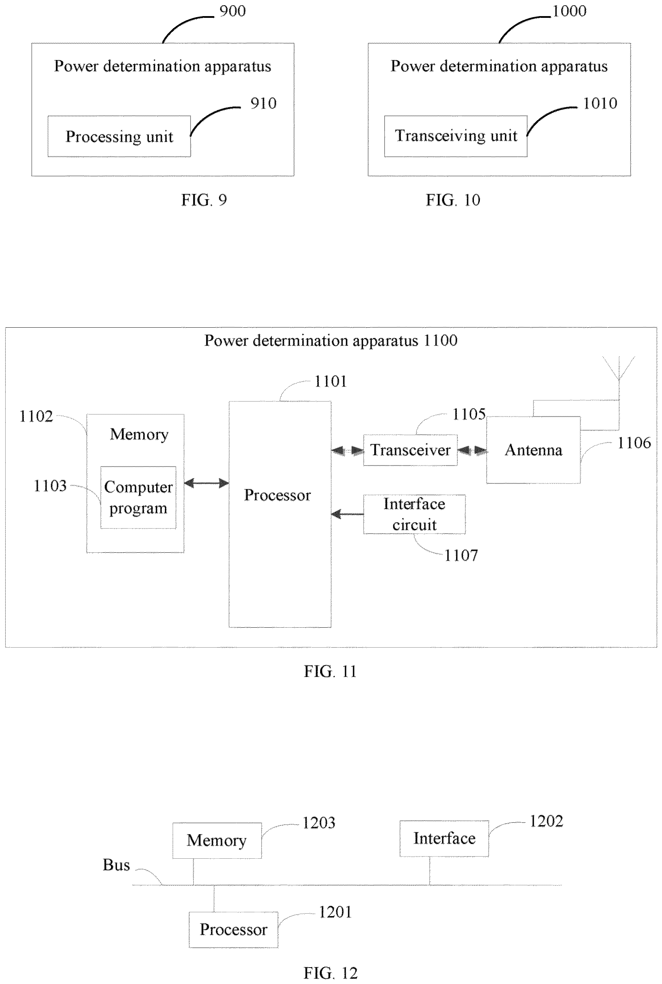

Referring to FIG. 9, FIG. 9 is a schematic structural diagram of a power determination apparatus provided by an embodiment of the present disclosure.

As shown in FIG. 9, the power determination apparatus 900 includes a processing unit 910.

The processing unit 910 is configured for determining out-of-band emission limitation information of the terminal device.

The processing unit 910 is further configured for determining a power of the terminal device according to the out-of-band emission limitation information.

Optionally, the processing unit 910 is specifically configured for: receiving the indication information sent by the network device, and determining the out-of-band emission limitation information of the terminal device according to the indication information.

Optionally, the processing unit 910 is specifically configured for: determining location information of the terminal device, and determining the out-of-band emission limitation information of the terminal device according to the location information.

Optionally, the out-of-band emission limitation information includes at least one of: an adjacent channel leakage ratio (ACLR), out-of-band emission, or out-of-band spurious emission.

Optionally, the processing unit 910 is specifically configured for: determining a power reduction value according to the out-of-band emission limitation information, a time-frequency resource location of the terminal device, the number of resource blocks, and a modulation manner of the terminal device; and determining the power of the terminal device according to the power reduction value.

Optionally, the processing unit 910 is specifically configured for: determining a power offset value according to the out-of-band emission limitation information; determining a reference power reduction value according to the time-frequency resource location of the terminal device, the number of the resource blocks, and the modulation manner of the terminal device; and determining the power reduction value according to the reference power reduction value and the power offset value.

Optionally, the apparatus further includes a transceiving unit, configured for sending the power of the terminal device to a network device.

Optionally, the indication information is of at least one bit for indicating whether the terminal device may relax a limitation on out-of-band emission.

Optionally, the indication information is of multiple (two or more) bits for indicating a degree of relaxation which is applied by the terminal device to a limitation on out-of-band emission.

According to the power determination apparatus in this embodiment, the out-of-band emission limitation information of the terminal device may be determined, and the power of the terminal device may be determined according to the out-of-band emission limitation information, such that the terminal device can determine different powers according to different limitations on out-of-band emission, and determine different power reduction values according to different situations, which can reduce the unnecessary power reduction in some special situations, increase the uplink coverage of the terminal device, and effectively improve communication efficiency and quality of communication links.

Referring to FIG. 10, FIG. 10 is a schematic structural diagram of a power determination apparatus provided by an embodiment of the present disclosure.

As shown in FIG. 10, the power determination apparatus 1000 includes a transceiving unit 1010.

The transceiving unit 1010 is configured for sending indication information to a terminal device.

The indication information is to determine out-of-band emission limitation information of the terminal device, to determine a power of the terminal device according to the out-of-band emission limitation information.

Optionally, the out-of-band emission limitation information includes at least one of: an adjacent channel leakage ratio (ACLR), out-of-band emission, or out-of-band spurious emission.

Optionally, the indication information is of at least one bit for indicating whether the terminal device may relax a limitation on out-of-band emission.

Optionally, the indication information is of multiple (two or more) bits for indicating a degree of relaxation which is applied by the terminal device to a limitation on out-of-band emission.

Optionally, the transceiving unit 1010 is further configured for receiving a power of the terminal device sent by the terminal device.

According to the power determination apparatus in this embodiment, indication information may be sent to a terminal device, where the indication information is to determine out-of-band emission limitation information of the terminal device, to determine the power of the terminal device according to the out-of-band emission limitation information, such that the terminal device can determine the out-of-band emission limitation information, determine different powers according to different limitations on out-of-band emission, and determine different power reduction values according to different situations, which can reduce the unnecessary power reduction in some special situations, increase the uplink coverage of the terminal device, and effectively improve communication efficiency and quality of communication links.

To implement the above embodiments, an embodiment of the present disclosure further provides a communication apparatus, including a processor and a memory. The memory stores a computer program, and the processor executes the computer program stored in the memory to cause the apparatus to perform the methods shown in the embodiments in FIG. 2 to FIG. 6.

To implement the above embodiments, an embodiment of the present disclosure further provides a communication apparatus, including a processor and a memory. The memory stores a computer program, and the processor executes the computer program stored in the memory to cause the apparatus to perform the methods shown in the embodiments in FIG. 7 to FIG. 8.

To implement the above embodiments, an embodiment of the present disclosure further provides a communication apparatus, including a processor and an interface circuit. The interface circuit is configured for receiving code instructions and transmitting the code instructions to the processor, and the processor is configured for executing the code instructions to perform the methods shown in the embodiments in FIG. 2 to FIG. 6.

To implement the above embodiments, an embodiment of the present disclosure further provides a communication apparatus, including a processor and an interface circuit. The interface circuit is configured for receiving code instructions and transmitting the code instructions to the processor, and the processor is configured for executing the code instructions to perform the methods shown in the embodiments in FIG. 7 to FIG. 8.

Referring to FIG. 11, FIG. 11 is another schematic structural diagram of a power determination apparatus provided by an embodiment of the present disclosure. The power determination apparatus 1100 may be a network device or a terminal device; the power determination apparatus 1100 may also be a chip, a chip system, a processor, etc., that supports the network device to implement the above methods; the power determination apparatus 1100 may also be a chip, a chip system, a processor, etc., that supports the terminal device to implement the above methods. This apparatus may be configured for implementing the methods described in the above method embodiments, which may specifically refer to the description in the above method embodiments.

The power determination apparatus 1100 may include one or more processors 1101. The processors 1101 may be general-purpose processors, special-purpose processors, etc. For example, the processors 1101 may be baseband processors or central processing units. The baseband processor may be configured for processing a communication protocol and communication data, and the central processing unit may be configured for controlling the power determination apparatus (for example, a base station, a baseband chip, a terminal device, a terminal device chip, a DU, a CU, etc.), executing a computer program, and processing data of the computer program.

Optionally, the power determination apparatus 1100 may further include one or more memories 1102. The one or more memories 1102 may store a computer program 1103, and the processor 1101 executes the computer program 1103 to cause the power determination apparatus 1100 to perform the methods described in the above method embodiments. The computer program 1103 may be fixed in the processor 1101, and in this situation, the processor 1101 may be implemented by hardware.

Optionally, the memory 1102 may further store data. The power determination apparatus 1100 and the memory 1102 may be separately configured, or may be integrated together.

Optionally, the power determination apparatus 1100 may further include a transceiver 1105 and an antenna 1106. The transceiver 1105 may be referred to as a transceiving unit, a transceiving machine, a transceiving circuit, etc., and is configured for implementing a transceiving function. The transceiver 1105 may include a receiver and a sender. The receiver may be referred to as a receiving machine, a receiving circuit, etc., and is configured for implementing a receiving function. The sender may be referred to as a sending machine, a sending circuit, etc., and is configured for implementing a sending function.

Optionally, the power determination apparatus 1100 may further include one or more interface circuits 1107. The interface circuits 1107 are configured for receiving code instructions and transmitting the code instructions to the processor 1101. The processor 1101 executes the code instructions to cause the power determination apparatus 1100 to perform the methods described in the above method embodiments.

The power determination apparatus 1100 is a terminal device. The transceiver 1105 is configured for performing step 305 in FIG. 3, step 407 in FIG. 4, step 505 in FIG. 5, and step 607 in FIG. 6. The processor 1101 is configured for performing step 301 to step 304 in FIG. 3, step 401 to step 406 in FIG. 4, step 501 to step 504 in FIG. 5, and step 601 to step 607 in FIG. 6.

The power determination apparatus 1100 is a network device. The transceiver 1105 is configured for performing step 701 in FIG. 7, and step 801 to step 802 in FIG. 8.

In an implementation, the processor 1101 may include a transceiver for implementing the receiving and sending functions. For example, the transceiver may be a transceiving circuit, an interface, or an interface circuit. The transceiving circuit, the interface, or the interface circuit for implementing the receiving and sending functions may be separate or integrated together. The above transceiving circuit, interface, or interface circuit may be configured for reading and writing codes/data, or the above transceiving circuit, interface, or interface circuit may be configured for transmitting or transferring a signal.

In an implementation, the power determination apparatus 1100 may include a circuit, and the circuit may implement sending, receiving, or communicating functions in the above method embodiments. The processor and transceiver described in the present disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and transceiver may also be fabricated with various IC process technologies, such as a complementary metal oxide semiconductor (CMOS), an n-metal oxide semiconductor (NMOS), a p-metal oxide semiconductor (positive channel metal oxide semiconductor, PMOS), a bipolar junction transistor (BJT), a bipolar CMOS (BiCMOS), a silicon germanium (SiGe), a gallium arsenide (GaAs), etc.

The power determination apparatuses described in the above embodiments may be a network device or a terminal device, but scopes of the power determination apparatuses described in the present disclosure are not limited thereto, and structures of the power determination apparatuses may not be limited by FIG. 9 to FIG. 10. The power determination apparatus may be a separate device or may be part of a larger device. For example, the power determination apparatus may be:

(1) a separate integrated circuit IC, chip, or chip system or subsystem;
(2) a set of one or more ICs; optionally, the set of ICs may also include a storage component configured for storing data and a computer program;
(3) an ASIC, for example, a modem;
(4) a module that may be embedded within other devices;
(5) a receiving machine, a terminal device, an intelligent terminal device, a cellular phone, a wireless device, a handset, a mobile unit, an in-vehicle device, a network device, a cloud device, an artificial intelligence device, etc.; or
(6) other apparatus, etc.

The case in which the power determination apparatus may be a chip or a chip system may refer to the schematic structural diagram of the chip shown in FIG. 12. The chip shown in FIG. 12 includes a processor 1201 and an interface 1202. There may be one or more processors 1201, and there may be multiple interfaces 1202.

For the case in which the chip is configured for implementing functions of the network device in the embodiments of the present disclosure,

the interface 1202 is configured for receiving code instructions and transmitting the code instructions to the processor; and
the processor 1201 is configured for executing the code instructions to perform the methods shown in FIG. 2 to FIG. 6.

For the case in which the chip is configured for implementing functions of the terminal device in the embodiments of the present disclosure,

the interface 1202 is configured for receiving code instructions and transmitting the code instructions to the processor; and
the processor 1201 is configured for executing the code instructions to perform the methods shown in FIG. 7 to FIG. 8.

Optionally, the chip further includes a memory 1203, and the memory 1203 is configured for storing a necessary computer program and data.

Those skilled in the art may also understand that various illustrative logical blocks and steps listed in the embodiments of the present disclosure may be implemented by using electronic hardware, computer software, or a combination of the two. Whether such functions are implemented by hardware or software depends on specific applications and design requirements of an overall system. Those skilled in the art may use various methods to implement functions for each specific application, but this implementation should not be understood as going beyond the protection scope of the embodiments of the present disclosure.

An embodiment of the present disclosure further provides a communication system. The system includes the power determination apparatus as the terminal device and the power determination apparatus as the network device in the above embodiments of FIG. 9 to FIG. 10, or the system includes the power determination apparatus as the terminal device and the power determination apparatus as the network device in the above embodiment of FIG. 11.

The present disclosure further provides a readable storage medium storing instructions. The instructions, when executed by a computer, implement functions of any one of the above method embodiments.

The present disclosure further provides a computer program product. The computer program product, when executed by a computer, implements the functions of any one of the above method embodiments.

In the above embodiments, they may be implemented in whole or in part by software, hardware, firmware, or any combination thereof. When implemented in software, they may be implemented in whole or in part in the form of a computer program product. The computer program product includes one or more computer programs. When the computer programs are loaded and executed by a computer, the flows or functions according to embodiments of the present disclosure are generated in whole or in part. The computer may be a general purpose computer, a special purpose computer, a computer network, or other programmable apparatus. The computer program may be stored in a computer readable storage medium or transmitted from one computer readable storage medium to another computer readable storage medium. For example, the computer program may be transmitted from a website site, computer, server or data center to another website site, computer, server or data center by a wired (for example, a coaxial-cable, a fiber, a digital subscriber line (DSL)) or wirelessly (for example, infrared, wireless, microwave, etc.) manner. The computer readable storage medium may be any available medium that can be accessed by a computer or may be a data storage device, such as a server, data center, etc., including one or more integrated available mediums. The available medium may be a magnetic medium (for example, a floppy disk, a hard disk, a magnetic tape), an optical medium (for example, a digital video disc (DVD)), or a semiconductor medium (for example, a solid state disk (SSD)), etc.

Those skilled in the art may understand that various numerical numbers, such as "first", "second", etc., involved in the present disclosure are only for distinguishing for the convenience of description and are not intended to limit the scope of the embodiments of the present disclosure, and do not also represent an early-later sequence.

"At least one" in the present disclosure may also be described as one or more, and "a plurality of/multiple" may be two, three, four or more, which is not limited in the present disclosure. In the embodiments of the present disclosure, for a kind of technical features, technical features in the kind of technical features are distinguished by "first", "second", "third", "A", "B", "C", and "D", etc., and there is no an early-later sequence or a large-mall sequence among the technical features described by "first", "second", "third", "A", "B", "C", and "D".

The correspondence relationships shown in each table in the present disclosure may be configured or predefined. Values of the information in each table are merely examples, and may be configured as other values, which is not limited in the present disclosure. When configuring correspondence relationships between the information and each parameter, it is not necessarily required to configure all the correspondence relationships shown in each table. For example, correspondence relationships shown in certain rows may also not be configured in the tables in the present disclosure. For another example, appropriate variants and adjustments may be performed based on the above tables, for example, splitting, merging, etc. A name of a parameter shown by a title in each of the above tables may also be another name that can be understood by the communication apparatus, and a value or a representation manner of the parameter may also be another value or representation manner that may be understood by the communication apparatus. During implementation of each of the above tables, other data structures may also be used, for example, an array, a queue, a container, a stack, a linear table, a pointer, a linked list, a tree, a graph, a structure body, a class, a heap, a hashing table or a hash table, etc., may be used.

Predefinition in the present disclosure may be understood as defining, pre-defining, storing, pre-storing, pre-negotiating, pre-configuring, curing, or pre-firing.

Those skilled in the art may realize that units and algorithm steps of each example described in connection with the embodiments disclosed herein can be implemented in electronic hardware, or a combination of computer software and electronic hardware. Whether these functions are performed in hardware or software depends on specific applications and design constraint conditions of the technical solutions. Professional technicians may use different methods to implement the described functions for each specific application, but such implementation should not be considered to be beyond the scope of the present disclosure.

Those skilled in the art may clearly understand that for the convenience and conciseness of the description, specific working processes of the system, apparatus, and unit described above may refer to the corresponding processes in the above method embodiments, and will not be repeated here.

It should be understood that various forms of flows shown above may be used to reorder, add, or delete steps. For example, respective steps described in embodiments of the present disclosure may be performed in parallel, or may be performed sequentially, or may be performed in a different order, as long as the desired result of the technical solutions disclosed in the present disclosure can be achieved, which is not limited herein.

The above specific implementations do not constitute a limitation on the protection scope of the present disclosure. It should be understood by those skilled in the art that various modifications, combinations, sub-combinations, and substitutions may be made according to design requirements and other factors. Any modification, equivalent replacement, and improvement, and the like made within the spirit and principle of the present disclosure shall be contained in the protection scope of the present disclosure.

## Claims

1.  A power determination method, performed by a terminal device and comprising:

determining out-of-band emission limitation information of the terminal device; and
determining a power of the terminal device according to the out-of-band emission limitation information.

2. The method of claim 1, wherein the determining out-of-band emission limitation information of the terminal device comprises:

   receiving indication information sent by a network device; and
   determining the out-of-band emission limitation information of the terminal device according to the indication information.

3. The method of claim 1, wherein the determining out-of-band emission limitation information of the terminal device comprises:

   determining location information of the terminal device; and
   determining the out-of-band emission limitation information of the terminal device according to the location information.

4. The method of any one of claims 1 to 3, wherein the out-of-band emission limitation information comprises at least one of:

   an adjacent channel leakage ratio, ACLR,
   out-of-band emission, or
   out-of-band spurious emission.

5. The method of claim 4, wherein the determining a power of the terminal device according to the out-of-band emission limitation information comprises:

   determining a power reduction value according to the out-of-band emission limitation information, a time-frequency resource location of the terminal device, a number of resource blocks, and a modulation manner of the terminal device; and
   determining the power of the terminal device according to the power reduction value.

6. The method of claim 4, wherein the determining a power of the terminal device according to the out-of-band emission limitation information comprises:

   determining a power offset value according to the out-of-band emission limitation information;
   determining a reference power reduction value according to a time-frequency resource location of the terminal device, a number of resource blocks, and a modulation manner of the terminal device; and
   determining the power reduction value according to the reference power reduction value and the power offset value.

7. The method of claim 5 or 6, further comprising:
   sending the power of the terminal device to a network device.

8. The method of claim 2, wherein the indication information is of at least one bit for indicating whether the terminal device can relax a limitation on out-of-band emission.

9. The method of claim 2, wherein the indication information is of two or more bits for indicating a degree of relaxation which is applied by the terminal device to a limitation on out-of-band emission.

10. A power determination method, performed by a network device and comprising:

    sending indication information to a terminal device;
    wherein the indication information is to indicate out-of-band emission limitation information of the terminal device.

11. The method of claim 10, wherein the out-of-band emission limitation information comprises at least one of:

    an adjacent channel leakage ratio, ACLR,

out-of-band emission, or
out-of-band spurious emission.

12. The method of claim 10, wherein the indication information is of at least one bit for indicating whether the terminal device can relax a limitation on out-of-band emission.

13. The method of claim 10, wherein the indication information is of two or more bits for indicating a degree of relaxation which is applied by the terminal device to a limitation on out-of-band emission.

14. The method of any one of claims 10 to 13, further comprising:
receiving a power of the terminal device sent by the terminal device.

15. A power determination apparatus, applied to a terminal device and comprising:

a processing unit, configured for determining out-of-band emission limitation information of the terminal device; and
wherein the processing unit is further configured for determining a power of the terminal device according to the out-of-band emission limitation information.

16. The apparatus of claim 15, wherein the processing unit is specifically configured for:

receiving indication information sent by a network device; and
determining the out-of-band emission limitation information of the terminal device according to the indication information.

17. The apparatus of claim 15, wherein the processing unit is specifically configured for:

determining location information of the terminal device; and
determining the out-of-band emission limitation information of the terminal device according to the location information.

18. The apparatus of any one of claims 15 to 17, wherein the out-of-band emission limitation information comprises at least one of:

an adjacent channel leakage ratio, ACLR,
out-of-band emission, or
out-of-band spurious emission.

19. The apparatus of claim 18, wherein the processing unit is specifically configured for:

determining a power reduction value according to the out-of-band emission limitation information, a time-frequency resource location of the terminal device, a number of resource blocks, and a modulation manner of the terminal device; and
determining the power of the terminal device according to the power reduction value.

20. The apparatus of claim 18, wherein the processing unit is specifically configured for:

determining a power offset value according to the out-of-band emission limitation information;
determining a reference power reduction value according to a time-frequency resource location of the terminal device, a number of resource blocks, and a modulation manner of the terminal device; and
determining the power reduction value according to the reference power reduction value and the power offset value.

21. The apparatus of claim 19 or 20, further comprising:
a transceiving unit, configured for sending the power of the terminal device to a network device.

22. The apparatus of claim 16, wherein the indication information is of at least one bit for indicating whether the terminal device can relax a limitation on out-of-band emission.

23. The apparatus of claim 16, wherein the indication information is of two or more bits for indicating a degree of relaxation which is applied by the terminal device to a limitation on out-of-band emission.

24. A power determination apparatus, applied to a network device and comprising:

    a transceiving unit, configured for sending indication information to a terminal device;
    wherein the indication information is to indicate out-of-band emission limitation information of the terminal device.

25. The apparatus of claim 24, wherein the out-of-band emission limitation information comprises:
    at least one of an adjacent channel leakage ratio, ACLR, out-of-band emission, or out-of-band spurious emission.

26. The apparatus of claim 24, wherein the indication information is of at least one bit for indicating whether the terminal device can relax a limitation on out-of-band emission.

27. The apparatus of claim 24, wherein the indication information is of two or more bits for indicating a degree of relaxation which is applied by the terminal device to a limitation on out-of-band emission.

28. The apparatus of any one of claims 24 to 27, wherein the transceiving unit is further configured for:
    receiving a power of the terminal device sent by the terminal device.

29. A communication apparatus, comprising a processor and a memory, wherein the memory stores a computer program, and the processor, when executing the computer program stored in the memory, causes the apparatus to perform the method of any one of claims 1 to 9.

30. A communication apparatus, comprising a processor and a memory, wherein the memory stores a computer program, and the processor, when executing the computer program stored in the memory, causes the apparatus to perform the method of any one of claims 10 to 14.

31. A communication apparatus, comprising a processor and an interface circuit, wherein

    the interface circuit is configured for receiving code instructions and transmitting the code instructions to the processor; and
    the processor is configured for executing the code instructions to perform the method of any one of claims 1 to 9.

32. A communication apparatus, comprising a processor and an interface circuit, wherein

    the interface circuit is configured for receiving code instructions and transmitting the code instructions to the processor; and
    the processor is configured for executing the code instructions to perform the method of any one of claims 10 to 14.

33. A computer-readable storage medium, configured for storing instructions, wherein the instructions, when executed, implement the method of any one of claims 1 to 9.

34. A computer-readable storage medium, configured for storing instructions, wherein the instructions, when executed, implement the method of any one of claims 10 to 14.

Communication system

101                                    102

| Network device | Terminal device |

FIG. 1

Determine out-of-band emission limitation information of the terminal device — 201

Determine a power of the terminal device according to the out-of-band emission limitation information — 202

FIG. 2

Receive indication information sent by a network device — 301

Determine the out-of-band emission limitation information of the terminal device according to the indication information — 302

Determine a power reduction value according to the out-of-band emission limitation information, a time-frequency resource location of the terminal device, the number of resource blocks, and a modulation manner of the terminal device — 303

Determine the power of the terminal device according to the power reduction value — 304

Send the power of the terminal device to the network device — 305

FIG. 3

Receive indication information sent by a network device ⌐ 401

Determine the out-of-band emission limitation information of the terminal device according to the indication information ⌐ 402

Determine a power offset value according to the out-of-band emission limitation information ⌐ 403

Determine a reference power reduction value according to the time-frequency resource location of the terminal device, the number of the resource blocks, and the modulation manner of the terminal device ⌐ 404

Determine the power reduction value according to the reference power reduction value and the power offset value ⌐ 405

Determine the power of the terminal device according to the power reduction value ⌐ 406

Send the power of the terminal device to the network device ⌐ 407

FIG. 4

Determine location information of the terminal device ⌐ 501

Determine the out-of-band emission limitation information of the terminal device according to the location information ⌐ 502

Determine a power reduction value according to the out-of-band emission limitation information, a time-frequency resource location of the terminal device, the number of resource blocks, and a modulation manner of the terminal device ⌐ 503

Determine the power of the terminal device according to the power reduction value ⌐ 504

Send the power of the terminal device to the network device ⌐ 505

FIG. 5

Determine location information of the terminal device — 601

Determine the out-of-band emission limitation information of the terminal device according to the location information — 602

Determine a power offset value according to the out-of-band emission limitation information — 603

Determine a reference power reduction value according to the time-frequency resource location of the terminal device, the number of the resource blocks, and the modulation manner of the terminal device — 604

Determine the power reduction value according to the reference power reduction value and the power offset value — 605

Determine the power of the terminal device according to the power reduction value — 606

Send the power of the terminal device to the network device — 607

FIG. 6

Send indication information to a terminal device; where the indication information is configured for indicating out-of-band emission limitation information of the terminal device — 701

FIG. 7

Send indication information to a terminal device; where the indication information is configured for indicating out-of-band emission limitation information of the terminal device — 801

Receive a power of the terminal device sent by the terminal device — 802

FIG. 8

900

Power determination apparatus

910

Processing unit

FIG. 9

1000

Power determination apparatus

1010

Transceiving unit

FIG. 10

Power determination apparatus 1100

1101

1102

Memory

1103

Computer program

Processor

1105

Transceiver

Antenna

1106

Interface circuit

1107

FIG. 11

1203

Memory

1202

Interface

Bus

1201

Processor

FIG. 12

# INTERNATIONAL SEARCH REPORT

| International application No. |
|---|
| **PCT/CN2021/133229** |

### A. CLASSIFICATION OF SUBJECT MATTER

H04W 52/04(2009.01)i

According to International Patent Classification (IPC) or to both national classification and IPC

### B. FIELDS SEARCHED

Minimum documentation searched (classification system followed by classification symbols)

H04W; H04Q; H04L; H04B

Documentation searched other than minimum documentation to the extent that such documents are included in the fields searched

Electronic data base consulted during the international search (name of data base and, where practicable, search terms used)

CNTXT; WPABSC; WPABS; DWPI; 3GPP; ENTXTC; ENTXT; CNKI; IEEE: 带外辐射, 邻信道, 邻道, 邻区, 邻频道, 泄漏比, 泄露比, 无用辐射, OOB辐射, 杂散辐射, 限制, 功率, MPR, 回退, 位置, 地理, 山, 海, 沙漠, 湖, 资源块, 偏移, 放松, 放宽, out, band, radiation, ACLR, OOB, stray, limit, restrict, power, reduction, position, location, geography, mountain, sea, desert, lake, RB, resource, block, offset, relax

### C. DOCUMENTS CONSIDERED TO BE RELEVANT

| Category* | Citation of document, with indication, where appropriate, of the relevant passages | Relevant to claim No. |
|---|---|---|
| X | US 2021051595 A1 (QUALCOMM INC.) 18 February 2021 (2021-02-18) claims 29-30, description, paragraphs [0056]-[0057], [0094]-[0105] and [0153]-[0237], and figures 2-4, 10 and 14 | 1-4, 10-11, 14-18, 24-25, 28-34 |
| Y | US 2021051595 A1 (QUALCOMM INC.) 18 February 2021 (2021-02-18) ditto | 5-7, 19-21 |
| Y | CN 104144447 A (CHINA MOBILE COMMUNICATIONS CORP.) 12 November 2014 (2014-11-12) claim 9, and description, paragraphs [0039]-[0047] | 5-7, 19-21 |
| X | CN 101977432 A (NTT DOCOMO INC.) 16 February 2011 (2011-02-16) description, paragraphs [0130]-[0135] and [0227]-[0229] | 1-2, 4, 10-11, 14-16, 18, 24-25, 28-34 |
| A | CN 113572583 A (HUAWEI TECHNOLOGIES CO., LTD.) 29 October 2021 (2021-10-29) entire document | 1-34 |
| A | CN 106131946 A (SAMSUNG ELECTRONICS CO., LTD.) 16 November 2016 (2016-11-16) entire document | 1-34 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 July 2022** | **04 August 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/133229**

| Patent document cited in search report | | | Publication date (day/month/year) | Patent family member(s) | | | Publication date (day/month/year) |
|---|---|---|---|---|---|---|---|
| US | 2021051595 | A1 | 18 February 2021 | WO | 2021030001 | A1 | 18 February 2021 |
| | | | | CN | 114223268 | A | 22 March 2022 |
| | | | | EP | 4014361 | A1 | 22 June 2022 |
| CN | 104144447 | A | 12 November 2014 | WO | 2014180315 | A1 | 13 November 2014 |
| | | | | JP | 2016522628 | A | 28 July 2016 |
| | | | | EP | 2996380 | A1 | 16 March 2016 |
| | | | | US | 2016142976 | A1 | 19 May 2016 |
| CN | 101977432 | A | 16 February 2011 | MX | 2009010279 | A | 13 October 2009 |
| | | | | AU | 2008236218 | A1 | 16 October 2008 |
| | | | | WO | 2008123148 | A1 | 16 October 2008 |
| | | | | RU | 2009138002 | A | 10 May 2011 |
| | | | | BR | PI0809339 | A2 | 07 October 2014 |
| | | | | JP | WO2008123148 | A1 | 15 July 2010 |
| | | | | EP | 2141935 | A1 | 06 January 2010 |
| | | | | US | 2010118805 | A1 | 13 May 2010 |
| | | | | KR | 20100015577 | A | 12 February 2010 |
| | | | | CA | 2682219 | A1 | 16 October 2008 |
| | | | | CN | 101682896 | A | 24 March 2010 |
| CN | 113572583 | A | 29 October 2021 | | None | | |
| CN | 106131946 | A | 16 November 2016 | JP | 2017034724 | A | 09 February 2017 |
| | | | | EP | 3442156 | A1 | 13 February 2019 |
| | | | | JP | 2019068474 | A | 25 April 2019 |
| | | | | EP | 3748894 | A1 | 09 December 2020 |
| | | | | CN | 110572873 | A | 13 December 2019 |
| | | | | EP | 3515009 | A1 | 24 July 2019 |
| | | | | CN | 103190102 | A | 03 July 2013 |
| | | | | JP | 2013545397 | A | 19 December 2013 |
| | | | | EP | 2636171 | A2 | 11 September 2013 |
| | | | | CN | 103190103 | A | 03 July 2013 |
| | | | | WO | 2012060660 | A2 | 10 May 2012 |
| | | | | JP | 2018023160 | A | 08 February 2018 |
| | | | | WO | 2012060659 | A2 | 10 May 2012 |
| | | | | KR | 20190021303 | A | 05 March 2019 |
| | | | | KR | 20120048492 | A | 15 May 2012 |
| | | | | KR | 20120048491 | A | 15 May 2012 |
| | | | | JP | 2013544465 | A | 12 December 2013 |
| | | | | EP | 2636172 | A2 | 11 September 2013 |

Form PCT/ISA/210 (patent family annex) (January 2015)